# EUROPÄISCHE PATENTSCHRIFT

(11) **EP 4 223 178 B1**
(45) Veröffentlichungstag und Bekanntmachung des Hinweises auf die Patenterteilung: **31.07.2024**
(21) Anmeldenummer: 22154714.4
(22) Anmeldetag: 02.02.2022
(51) Int. Cl.: A45D 40/00, B65D 41/04, G06Q 30/02, G06Q 10/08, A45D 34/00, G06Q 10/087, B65D 51/24, B65D 51/28

(54) **VORRICHTUNG ZUR HYGIENISCHEN ABFÜLLUNG, ZUM TRANSPORT UND ZUR AUFBEWAHRUNG EINES KOSMETIKPRODUKTS**
DEVICE FOR HYGIENIC FILLING, TRANSPORT AND STORAGE OF A COSMETIC PRODUCT
DISPOSITIF DE REMPLISSAGE, DE TRANSPORT ET DE STOCKAGE DE MANIÈRE HYGIÉNIQUE D'UN PRODUIT COSMÉTIQUE

(43) Veröffentlichungstag der Anmeldung: 09.08.2023
(73) Patentinhaber: samplistick GmbH, 40477 Düsseldorf (DE)
(72) Erfinder: Mündler, Daniela, 40477 Düsseldorf (DE)
(74) Vertreter: Bosch Jehle Patentanwaltsgesellschaft mbH

(56) Entgegenhaltungen:
- WO-A2-01/91600
- GB-A- 2 103 083
- KR-U- 20180 003 252
- US-A1- 2018 280 905
- US-A1- 2021 235 849

## Beschreibung

Gegenstand der vorliegenden Erfindung ist eine Vorrichtung zur hygienischen Abfüllung, zum Transport und zur Aufbewahrung eines Kosmetikproduktes, sowie ein Verfahren zur Identifizierung und hygienischen Abfüllung eines Kosmetikprodukts.

Im kosmetischen Einzelhandel, insbesondere in Parfümerien oder Drogerien, im Fall von Apothekenkosmetik auch in den Apotheken, werden viele unterschiedliche Produkte im Sortiment geführt und vorgehalten. Diese Kosmetikprodukte liegen in verschlossenen, teils versiegelten Verpackungen vor. Für manche Produkte existieren Tester, die geöffnet zur Verfügung stehen und aus denen der Kunde eine geringe Menge entnehmen kann, um das Produkt vor Ort zu testen. Eine eingehendere Testung, z. B. bei dekorativer Kosmetik zur Farbwirkung bei unterschiedlichen Lichtverhältnissen oder bei Duftproben zur Entwicklung eines Dufts über die Zeit und in Interaktion mit der individuellen Hautbeschaffenheit des Kunden, ist oft in der kurzen Zeit eines Besuchs und Einkaufs in der Parfümerie nicht möglich.

Weiterhin ist es hygienisch unter Umständen nicht gewünscht, dass verschiedene Kunden den gleichen Tester zur Entnahme des zu testenden Produkts benutzen.

Falls ein Kunde ein Kosmetikprodukt nicht am Ort der Beratung oder des Einkaufs, des Point of Service (POS), wie in der Parfümerie, sondern im privaten Bereich testen möchte oder über mehrere Anwendungen hinsichtlich z.B. der Verträglichkeit, Allergien oder einer Wirkung auf das Hautbild untersuchen möchte, wäre eine längerfristige Anwendung außerhalb des POS wünschenswert. Hier müsste dem Kunden das Produkt in einer kleinen Testmenge als Produktprobe mitgegeben werden. Zu diesem Zweck existieren vorgefertigte, in Testmengen abgepackte Produktproben.

Allerdings wird nur eine äußert geringe Anzahl der Kosmetikprodukte, die im Einzelhandel angeboten werden, als Produktproben vorgehalten. Hierbei handelt es sich insbesondere um Neuerscheinungen, damit den potentiellen Kunden die neu am Markt eingeführten Produkte zur individuellen Testung präsentiert werden können. Sowohl aus logistischen Gründen in der Produktion, als auch aus Haltbarkeits- und Platzgründen im Ladengeschäft oder Lager des Einzelhandels ist es in der Regel so, dass nur von sehr wenigen der vorgehaltenen Kosmetikprodukte des Sortiments auch Produktproben rfin Probengröße insbesondere zum Mitgeben für die Kunden verfügbar sind.

Dabei werden flüssige Zubereitungen wie Duftproben oft in kleinen Pumpzerstäubern abgegeben, die in der Handhabung teilweise Schwierigkeiten bereiten. Da die Abmessungen sehr klein sind, ist die Betätigung des Pumpmechanismus ein umständlicher Vorgang, insbesondere für Kunden mit schlechterer Feinmotorik wie z.B. Senioren.

Von halbfesten und teilweise auch von flüssigen Zubereitungsformen werden Produktproben auch in Siegelrandbeuteln, sogenannten Sachets, für den Einmalgebrauch verpackt. Diese können direkt oder in Flyern oder Printmedien eingeklebt an die potentiellen Kunden verteilt werden. Die Sachets werden an einer Lasche aufgerissen und die Produktprobe wird an der Aufreißöffnung entnommen. Hierbei ist ein sauberes Entnehmen kaum möglich und die Probe kommt mit der Außenseite in Berührung. Ein einmal aufgerissenes Sachet kann nicht wieder verschlossen und somit nur schlecht aufbewahrt werden.

Verpackungen oder Behältnisse für kosmetische Produktproben sind in verschiedenen Ausführungen auch aus dem Stand der Technik bekannt.

In der FR 2 823 719 A1 wird beispielsweise eine Verpackung beschrieben, die eine Probe eines kosmetischen Produkts enthalten soll. Sie umfasst eine äußere Hülle, die eine obere Platte (3) bildet, einen Deckel (4), der mittels eines Scharniers (42) nach hinten kippbar ist, und einen Behälter (5) für das kosmetische Produkt. Die obere Platte weist einen abnehmbaren Mittelteil (30) auf, der an einem Umfangsteil mittels einer ersten Schwächungslinie befestigt ist. Der Mittelteil ist am Deckel befestigt, so dass das Öffnen des Deckels zum Reißen der Schwächungslinie führt. Der mittlere Teil der oberen Platte hat eine untere Fläche, die mit einer reflektierenden Schicht (300) beschichtet ist, so dass diese Fläche beim Öffnen des Deckels einen Spiegel bildet.

Ein Pumpzerstäuber für Kosmetikproben ist beipsielsweise in FR 2 837 177 A1 offenbart. Die Vorrichtung (1) umfasst einen Behälter (2) mit einem Körper (3) mit geschlossenem Boden (4) und einem beweglichen Teil (20) mit einer Dichtlippe (25), der auf manuellen Druck auf eine Oberfläche (21) durch Verringern des Volumens (80) zwischen ihm und der Basis reagiert, wodurch das Produkt durch einen Auslass (7) gesprüht wird. Der bewegliche Teil wird durch eine Feder (6) in seine Ausgangsposition zurückgeführt, sodass Luft in den Behälter eindringen kann.

Weiterhin beschreibt die FR 2 826 245 A1 einen Spender für eine flüssige kosmetische Produktprobe, typischerweise eine Creme. Dieser umfasst einen Behälter (2), der die Creme enthält, und von einer Seitenwand (20) und einem ein Nutzvolumen begrenzenden Boden gebildet wird. Das Nutzvolumen liegt typischerweise im Bereich von 2 bis 10 cm³. Ein an der Innenfläche des Behälters angreifender Ring (3) bildet einen Anschlag (31) für einen Kolben (4) während dessen axialer Verschiebung. Ein Ausgabekopf (5) greift in den Boden ein und umfasst einen Auslasskanal (50) mit Mitteln zum Öffnen oder Schließen des Kanals.

Weitere Vorrichtungen aus dem Stand der Technik beschreiben Behältnisse für Kosmetikprodukte, die in größeren Mengen als derjenigen einer Produktprobe abgepackt werden sollen.

In der US 2005/006412 A1 wird eine Vorrichtung zum Verpacken und Abgeben eines kosmetischen Produkts beschrieben, die einen Behälter zum Aufnehmen des Produkts umfasst, wobei der Behälter durch einen Körper begrenzt wird. Ein bewegliches Element bewegt sich relativ zum Behälterkörper und ist in der Lage, sich als Reaktion auf eine manuell auf eine Oberfläche eines Betätigungselements ausgeübte Wirkung von einer ersten Position in eine zweite Position zu bewegen. Das bewegliche Element enthält eine erste Lippe, die dazu bestimmt ist, während mindestens eines Teils seiner Bewegung mit einer Innenwand des Körpers in Eingriff zu treten, wodurch eine Produktdosis innerhalb des Behälters so isoliert wird, dass sie durch mindestens eine Abgabeöffnung ausgestoßen wird. Das bewegliche Element umfasst auch eine obere Lippe, die während zumindest eines Teils seiner Bewegung von der ersten Position in die zweite Position dicht an der Innenwand anlegbar ist.

Ein Behältersystem wird in US 2015/037083 A1 offenbart, das einen Flaschenkörper mit einem Innenhohlraum und einem Gewinderand umfasst, ein Innengehäuse, das mit dem Innenhohlraum kompatibel ist, eine Schicht einer Inhaltsprobe, die zwischen dem Innenhohlraum des Flaschenkörpers und dem Innengehäuse platziert ist, einen Behälter, der herausnehmbar innerhalb des Innengehäuses und dem aufbewahrten Inhalt platziert ist, und einen Deckel, um eine Abdichtung mit dem Flaschenkörper zu bilden, wenn er an dem Gewinderand befestigt ist. Am Deckel kann auch ein Pinsel angebracht werden, um den Inhalt zu verteilen. Der Inhalt wird vor einem Abbau durch Umwelteinflüsse geschützt, während die Schicht weiterhin Merkmale des Inhalts anzeigt. Der Behälter weist einen ersten Abschnitt und einen zweiten Abschnitt auf. Die Abschnitte haben unterschiedliche Formen, sind jedoch in einen einzigen Hohlraum integriert. Der einzige Hohlraum verhindert das Absetzen des Inhalts und erleichtert das Rühren des Inhalts für den tatsächlichen Gebrauch.

Aus der Patentanmeldung DE 10 2009 021 501 A1 ist ein Vorratsbehälter für Flüssigkeiten oder für zähflüssige oder versprühbare Produkte bekannt, der mit einer Dosiervorrichtung verbindbar ist, wobei der Vorratsbehälter zylinderförmig ausgebildet ist und einen Boden mit einer Druckausgleichseinrichtung, sowie eine gegenüberliegende offene Seite aufweist. Die offene Seite umfasst einen Verbindungsbereich und im Vorratsbehälter ist ein durch Saugkraft zusammenlegbarer Innenbeutel angeordnet. Aufgrund der verschiedenen Teile des Vorratsbehälters ist die Herstellung aufwändig.

Aus die Patentanmeldungen GB2103083A und KR20180003252U sind weitere Vorratsbehälter für kosmetische Produkte bekannt.

Der Erfindung liegt die Aufgabe zugrunde, eine Vorrichtung und ein Verfahren bereitzustellen zur Abfüllung von Kosmetikprodukten in probenüblichen Mengen bei gleichzeitig einfacher und hygienischer Handhabung.

Die Herstellung einer solchen Vorrichtung soll wirtschaftlich und einfach sein.

Außerdem sollen die beschriebenen Nachteile der bekannten Verpackungen für Produktproben von kosmetischen Produkten überwunden werden.

Die vorliegende Aufgabe wird dabei durch eine erfindungsgemäße Vorrichtung zur hygienischen Abfüllung, zum Transport und zur Aufbewahrung eines Kosmetikprodukts mit den Merkmalen nach Anspruch 1, sowie durch das erfindungsgemäße Verfahren zur Identifizierung und hygienischen Abfüllung eines Kosmetikprodukts mit den Merkmalen gemäß Anspruch 13 gelöst.

Der Begriff "Produktprobe" beschreibt im Sinne der vorliegenden Erfindung ein Kosmetikprodukt in einer Menge, die diejenige Menge deutlich unterschreitet, in der das Produkt in handelsüblichen Verpackungen erhältlich ist und an den Endverbraucher abgegeben wird. Abhängig von den Charakteristika eines Kosmetikprodukts unterscheiden sich handelsübliche Verpackungen in Menge und Form sehr. Diese Charakteristika sind beispielsweise die Textur, Ort und Art der Anwendung oder die Inhaltsstoffe. So kann beispielsweise für eine Bodylotion eine Menge von 50 ml bis zu 500 ml eine handelsübliche Menge sein, wohingegen ein Lippenstift oder Lipgloss in deutlich geringerer Menge, üblicherweise 3 ml bis 10 ml, handelsüblich abgefüllt wird. Entsprechend geringer ist die Menge einer Produktprobe.

Eine "handelsübliche Verpackung" ist im Sinne der vorliegenden Erfindung eine Verpackung in einer derartigen Form und Größe, wie sie im Handel gebräuchlicherweise für das jeweilige Produkt an den Nutzer abgegeben wird. Dies können beispielsweise Tuben, Tiegel, Flakons, Pumpflakons, Stifte, auch in Schraub- oder Schiebehülsen, Container mit Applikator, Pfännchen, Paletten oder Dosen sein.

Als "Container" wird im Folgenden ein Behälter für ein kosmetisches Produkt bezeichnet, der mit einem Deckel mit integriertem Applikator, zum Beispiel einem Schwämmchen, einem Pinsel oder einem Löffel verbunden werden kann.

Der "Nutzer" ist vorliegend eine Endverbraucherin oder ein Endverbraucher, eine Interessentin oder ein Interessent, die bzw. der sich für ein kosmetisches Produkt interessiert oder als Interessent/in gewonnen werden soll, und dieses erst testen möchte. Dieser Test soll eine oder mehrere Anwendungen ermöglichen, beispielsweise über mehrere Tage, um auch einen längerfristigen Effekt, wie eine Veränderung des Hautbilds, der Haarbeschaffenheit oder sonstiges, sowohl im positiven wie im negativen Sinne feststellen zu können. Ferner soll der Test für den Nutzer ortsungebunden möglich sein, insbesondere auch als Eigenanwendung zu Hause.

Im Sinne der vorliegenden Erfindung ist ein "Anbieter" eine Einzelhändlerin oder ein Einzelhändler, eine Herstellerin oder ein Hersteller, oder ein Promotor, die bzw. der ein kosmetisches Produkt und/oder eine Produktprobe entgeltlich oder unentgeltlich dem Nutzer anbieten oder an den Nutzer abgeben möchte.

Ein "Tester" ist im Sinne der beschriebenen Erfindung eine handelsübliche oder eine kleinere Verpackung, die im Einzelhandel nicht zum Verkauf zur Verfügung steht, sondern die im Ladengeschäft geöffnet werden kann oder geöffnet vorgehalten wird, um dem Nutzer eine testweise Anwendung zu ermöglichen. In Sonderfällen, insbesondere im Fall von Lippenstift oder anderen Make-up Produkten, kann ein "Tester" auch eine modifizierte Verpackung sein, die die Farbe des Produkts nach außen visualisiert.

Die "hygienische Abfüllung" beinhaltet insbesondere die Entnahme einer Produktprobe aus einer handelsüblichen Verpackung und die Übertragung in einen Container, ohne dass die Textur berührt wird. So wird der Eintrag von Keimen bei der Abfüllung vermieden.

Mit dem "Entnahmelöffel" wird einerseits das Kosmetikprodukt als Produktprobe aus dem Tester entnommen. Andererseits wird durch den Nutzer das Kosmetikprodukt aus dem Entnahmelöffel für eine Anwendung entnommen.

Die "Vertiefung" ist ein konkaver Bereich des Entnahmelöffels, in den eine Produktprobe aufgenommen werden kann.

Die Rückseite der Vertiefung bildet die konvexe "Außenseite" dieses Bereichs. Sie sollte aus hygienischen Gründen nicht berührt werden.

Der Begriff "ergonomisch" geformt bezieht sich in der vorliegenden Erfindung auf eine Form, die den physiologischen Gegebenheiten des Körpers, insbesondere der menschlichen Hand und des menschlichen Fingers, angepasst ist und damit den Vorgang des Öffnens und Schließens einer Vorrichtung, die Entnahme und das Anwenden einer Produktprobe durch den Nutzer optimiert und somit leichter und angenehmer macht. Der Begriff "Identifikator" beschreibt im Rahmen der vorliegenden Erfindung ein künstlich zugewiesenes Merkmal zur eindeutigen Identifizierung. Hierunter wird beispielsweise ein Strichcode oder QR-Code verstanden oder jede andere dem jeweiligen technischen Standard entsprechende Kennzeichnung. An einem Kosmetikprodukt ist regelmäßig ein Identifikator angebracht, oft an der handelsüblichen Verpackung oder auf der Umverpackung oder der Kartonage. Tester weisen oft keinen Identifikator auf, da sie nicht für die Abgabe an Nutzer konzipiert sind. Sie sind aber immer mindestens mit einer Chargennummer gekennzeichnet.

Eine erfindungsgemäße Vorrichtung zur hygienischen Abfüllung, zum Transport und zur Aufbewahrung eines Kosmetikprodukts umfasst einen Entnahmelöffel, der einen Kopfbereich mit einer U förmigen Kante und eine Vertiefung zur Aufnahme des Kosmetikprodukts und einen Griff aufweist, und einen Hohlkörper mit einer Außenwand, einer Innenwand und einer Öffnung, durch welche der Entnahmelöffel in den Hohlkörper eingesteckt werden kann, wobei der Hohlkörper und der Entnahmelöffel lösbar miteinander verbunden werden können und wobei die Innenwand des Hohlkörpers und die U-förmige Kante des Kopfbereichs des Entnahmelöffels derart ausgestaltet sind, dass im verbundenen Zustand von Hohlkörper und Entnahmelöffel die U-förmige Kante des Entnahmelöffels entlang der Innenwand des Hohlkörpers anliegt, wobei die Ausgestaltung der U-förmigen Kante und der Innenwand verhindern, dass das abgefüllte Kosmetikprodukt nach der Abfüllung während Transport und Aufbewahrung von der Vertiefung des Entnahmelöffels an die Außenseite oder den unteren Bereich der Innenwand gelangt.

Mit dieser Vorrichtung wird von einem Kosmetikprodukt, das in einer handelsüblichen Verpackung oder einem Tester zur Verfügung steht, eine Testmenge, vorzugsweise in der Größe einer Produktprobe, entnommen. Dadurch, dass der Entnahmelöffel einen Kopfbereich und einen Griff aufweist, kann er am Griff angefasst werden und das Kosmetikprodukt kann mit Hilfe des Kopfbereichs berührungslos in die Vertiefung des Entnahmelöffels befördert werden.

So ist es möglich, ein Kosmetikprodukt hygienisch abzufüllen, ohne die Textur zu berühren. Sowohl in das ursprüngliche Produkt, als auch in die abgefüllte Produktprobe wird durch die berührungslose Handhabung der Eintrag von Keimen vermieden.

Die Abfüllung erfolgt dabei mittels der U-förmigen Kante am Kopfbereich. Die Kante ist grundsätzlich rechtwinklig. Sie ist dabei scharf genug ausgestaltet, sodass mit ihr auch festere Texturen, wie beispielsweise Stifte und gepresste Puder entnommen bzw. abgefüllt werden können. Diese sind vorzugsweise Lippenstifte, Lipgloss, Abdeckstifte, Kajal- und Konturenstifte, sowie Lidschatten, Gesichtspuder oder Rouge.

Vorzugsweise ist die U-förmige Kante auch weich genug ausgestaltet bzw. in dem Maße entgratet, sodass bei der Anwendung des in der Vertiefung des Entnahmelöffels befindlichen Kosmetikprodukts eine angenehme Handhabung ohne Verletzungsrisiko möglich ist. Hierbei ist zu berücksichtigen, dass zur Anwendung des Kosmetikprodukts dieses aus der Vertiefung mit beispielsweise dem Finger des Nutzers entnommen wird.

Der Griff des Entnahmelöffels besitzt eine breite Grifffläche, die leichtes und hygienisches Arbeiten erlaubt. Der Griff kann zylindrisch, hyperboloid und/oder konisch zulaufend ausgebildet sein. Er kann ebenfalls in Form eines (geraden) Prismas ausgestaltet sein. Bevorzugt ist eine hyperboloide Form mit einer geringen Krümmung. Die Mantelfläche stellt dabei die Grifffläche dar. Dabei ist der Radius der Krümmung vorzugsweise so, dass die Grifffläche angenehm mit den menschlichen Fingerendgliedern gegriffen werden kann. Weiterhin kann die Grifffläche teils hyperboloid oder konisch und teils zylindrisch ausgestaltet sein. Diese Ausgestaltungen haben den Vorteil, dass der Griff eine einfache und leichte Bedienung zulässt.

Die Vorrichtung weist weiterhin einen Hohlkörper mit einer Außenwand, einer Innenwand und einer Öffnung auf. Dabei kann der Entnahmelöffel durch die Öffnung in den Hohlkörper eingesteckt werden. Die Öffnung weist dabei in Abhängigkeit von der Form des Griffs die Form eines Kreises oder eines Vielecks auf. Im Fall eines Vielecks körnen die Ecken auf einem Kreisumfang zu liegen.

In verbundenem Zustand liegt die U-förmige Kante des Entnahmelöffels entlang der Innenwand des Hohlkörpers an. Dies wird dadurch erreicht, dass die U-förmige Kante und die Innenwand des Hohlkörpers entsprechend ausgestaltet sind. Beide besitzen zusammenpassende Formen. Die Ausgestaltung der U-förmigen Kante und der Innenwand verhindern, dass das abgefüllte Kosmetikprodukt nach der Abfüllung während Transport und Aufbewahrung von der Vertiefung des Entnahmelöffels an die Außenseite oder den unteren Bereich der Innenwand gelangt. Das abgefüllte Kosmetikprodukt kann so sauber transportiert und aufbewahrt werden.

Cremige und festere Texturen verbleiben in der Regel nach der hygienischen Abfüllung auch während Transport und Aufbewahrung in der Vertiefung des Kopfbereichs des Entnahmelöffels. Dünnflüssige oder flüssige Texturen können durch die entsprechende Ausrichtung der Vorrichtung vor dem Lösen von Hohlkörper und Entnahmelöffel ebenfalls nahezu vollständig in die Vertiefung des Entnahmelöffels befördert werden.

Vorteilhafterweise kann das Kosmetikprodukt durch die erfindungsgemäße Ausgestaltung der Vorrichtung, bei der im verbundenen Zustand von Hohlkörper und Entnahmelöffel die U-förmige Kante entlang der Innenwand des Hohlkörpers anliegt auch nach Transport und Aufbewahrung nahezu vollständig aus der Vertiefung des Kopfbereichs des Entnahmelöffels entnommen werden.

Diese erfindungsgemäße Vorrichtung hat insbesondere den Vorteil, dass es erstmals gelingt, mit einer einzigen Vorrichtung jedes mögliche Kosmetikprodukt unabhängig von seiner Textur und der Form der handelsüblichen Verpackung oder des Testers hygienisch abzufüllen. Es ist nicht mehr notwendig, unterschiedliche Produktproben in einzelnen Verpackungen herzustellen und vorrätig zu halten.

In einer besonders vorteilhaften Ausgestaltung sind die Innenwand des Hohlkörpers und die Vertiefung des Kopfbereichs des Entnahmelöffels derart ausgestaltet, dass im verbundenen Zustand die Außenseite des Kopfbereichs des Entnahmelöffels an der Innenwand des Hohlkörpers anliegt. So wird insbesondere verhindert, dass Teile des Kosmetikprodukt von der Vertiefung des Entnahmelöffels in andere Bereiche des Hohlkörpers gelangen. In dieser Ausgestaltung umschließt der Hohlkörper den Kopfbereich des Entnahmelöffels. Dies kann beispielsweise durch eine Anpassung der Krümmung der Innenseite des Hohlkörpers an die Krümmung der Außenseite des Kopfbereichs des Entnahmelöffels erreicht werden.

Vorteilhafterweise ermöglicht es die Krümmung der Innenwand des Hohlkörpers, dass eventuell dort anhaftende Reste des Kosmetikprodukts mit dem Finger entnommen werden können.

Bei einer besonders bevorzugten Ausführungsform der erfindungsgemäßen Vorrichtung weist der Entnahmelöffel einen zwischen dem Kopfbereich und dem Griff angeordneten Sockelbereich auf, der einen dem Griff zugewandten Verbindungsbereich und einen dem Kopfbereich zugewandten Dichtbereich aufweist. Der Hohlkörper weist einen an der Innenwand im Bereich der Öffnung angeordneten, weiteren Verbindungsbereich auf. Diese Verbindungsbereiche sind derart ausgestaltet, dass die lösbare Verbindung durch das Verbinden dieser Verbindungsbereiche miteinander erfolgt und der Dichtbereich des Entnahmelöffels im verbundenen Zustand dichtend gegen die Innenwand des Hohlkörpers gepresst wird. Dabei liegt der Dichtbereich insbesondere ringförmig an der Innenwand des Hohlkörpers an.

Die Verbindungsbereiche können dabei beispielsweise als lösbare Schnappverbindung ausgestaltet sein, wobei einer der Verbindungsbereiche eine Wulst und der andere der Verbindungsbereiche eine Vertiefung oder einen Hinterschnitt aufweist. Bei der Verbindung beider Verbindungsbereiche rastet die Wulst des einen Verbindungsbereichs in die Vertiefung oder den Hinterschnitt des anderen Verbindungsbereichs ein. Ebenso ist eine Bajonettverbindung oder eine Schraubverbindung möglich.

Vorteilhafterweise kann der Verbindungsbereich des Entnahmelöffels ein Außengewinde und der Verbindungsbereich des Hohlkörpers ein Innengewinde aufweisen. Das Innengewinde und das Außengewinde können als Trapezgewinde mit einem Flankenwinkel von mindestens 28° und höchstens 32° ausgestaltet sein. Es kann auch ein Flankenwinkel von 25° bis 35° vorgesehen werden. Besonders bevorzugt ist ein Flankenwinkel von 30°. Hierbei ist es insbesondere vorteilhaft, dass das Innengewinde und das Außengewinde im verbundenen Zustand dicht abschließen.

In einer besonders bevorzugten Ausführungsform ist die Außenwand des Hohlkörpers hyperboloid, zylinderförmig und/oder konisch zulaufend ausgestaltet. Die Außenwand kann dabei so gestaltet sein, dass hyperboloide, zylinderförmige und konisch zulaufende Bereiche abwechseln. Insbesondere kann die Außenwand einen hyperboloiden Mittelbereich und zwei zylinderförmige Randbereiche aufweisen. Die zylinderförmigen Randbereiche können dabei sehr klein sein, sodass sich ein optisch ansprechender Hohlkörper ergibt. Dabei ist eine hyperboloide Form mit einer nur geringen Krümmung der Außenwand bevorzugt. Die Krümmung weist dabei einen Radius auf, der ein angenehmes Berühren und Handhaben mit der Hand ermöglicht. Möglich wäre auch eine Außenwand in Form eines Prismas. Hierbei ist es insbesondere vorteilhaft, dass der Hohlkörper auf einer ebenen Fläche nicht wegrollen kann.

Ebenso kann die Innenwand des Hohlkörpers eine hyperboloide, zylinderförmige und/oder konisch zulaufende Form aufweisen. Bevorzugt weist sie einen konischen und/oder hyperboloiden Bereich auf, der sich zur Seite der Öffnung hin weitet. So kann das Einstecken des Entnahmelöffels in den Hohlkörper erleichtert werden. Auch bei prismaförmig ausgestalteter Außenwand ist eine hyperboloide, zylinderförmige und/oder konisch zulaufende Form der Innenwand vorteilhaft. Die Wandstärke ist dann variierend.

Es ist dabei bevorzugt, wenn die Vorrichtung im verbundenen Zustand und auch der Hohlkörper und der Entnahmelöffel jeweils als Einzelteile ein ästhetisches Design aufweisen. Dies beinhaltet vor allem eine Formgebung, Ausgestaltung und Dimensionen, die im Bereich der menschlichen Wahrnehmung optisch und haptisch einen schönen und harmonischen Eindruck hinterlassen.

Vorzugsweise haben die Vorrichtung, der Hohlkörper und der Entnahmelöffel eine derartige Formgebung, Ausgestaltung und Dimension, dass eine Handhabung als Handschmeichler ermöglicht wird. Insbesondere können die Vorrichtung, der Hohlkörper und der Entnahmelöffel von ihren Abmessungen her bequem in eine durchschnittlich große, menschliche Hand passen und durch die Beschaffenheit ihrer Oberflächen, Formen und Kanten bei der Berührung vor allem durch den Nutzer ein angenehmes Gefühl hervorrufen.

Die Vertiefung des Entnahmelöffels weist bevorzugt ein Füllvolumen von 1 ml bis 15 ml auf. Dabei kann die Vertiefung in einer Ausführungsform ein Füllvolumen von 1 ml bis 4 ml aufweisen, in einer anderen von 10 ml bis 15 ml oder von 9 ml bis 12 ml. Denkbar wäre auch ein Füllvolumen von 1 ml bis 7 ml, besonders bevorzugt ist ein Füllvolumen von 3 ml bis 4 ml oder von 3 ml bis 5 ml. Größere Füllvolumina sind besonders geeignet für Haar- und Körperpflegeprodukte oder Badezusätze. Kleinere Füllvolumina eignen sich für Gesichtspflege, dekorative Kosmetik, Augenpflege oder ähnliches.

Die Vertiefung des Entnahmelöffels weist bevorzugt eine Tiefe von 3-10 mm auf, besonders bevorzugt von 4-6 mm. Sie weist zudem eine Breite von 12-17 mm, bevorzugt von 13-15 mm auf. Die Länge der Vertiefung des Entnahmelöffels beträgt vorteilhafterweise 25-40 mm, besonders bevorzugt 30-35 mm. Es ist ebenfalls von Vorteil wenn die Vertiefung des Entnahmelöffels ergonomisch geformt ist. Auch die Vertiefung weist eine Krümmung auf, die zur ergonomischen Form beiträgt. Die Krümmung ist dabei insbesondere derart ausgestaltet, dass das Kosmetikprodukt leicht und angenehm entnommen werden kann und, insbesondere die letzte Portion, nahezu vollständig, leicht und angenehm aus der Vertiefung mit einem Finger entnommen werden kann.

Im Fall eines größeren Füllvolumens weist die Vertiefung des Entnahmelöffels eine Tiefe bis zu 15 mm auf, besonders bevorzugt von 12-14 mm. Die Vertiefung des Entnahmelöffels weist zudem eine Breite bis zu 22 mm, bevorzugt von 19-21 mm auf. Die Länge der Vertiefung des Entnahmelöffels beträgt bei einem größeren Füllvolumen vorteilhafterweise bis zu 62 mm, besonders bevorzugt 59-61 mm.

In einer bevorzugten Ausführungsform der erfindungsgemäßen Vorrichtung bilden der Sockelbereich und der Griff zusammen einen zumindest teilweise von außen zugänglichen Hohlraum. Der Hohlraum ist insbesondere zylinderförmig. Dies hat den Vorteil, dass in diesen Hohlraum von außen beispielsweise Informationsmaterial, wie ein Beipackzettel, eine Gebrauchsinformation oder Werbematerial eingesteckt werden kann. So kann beispielsweise für einen Nutzer unterschiedliche Information zum abgefüllten Kosmetikprodukt direkt an der Vorrichtung angebracht werden. Auf diese Weise können die jeweils aktuellen gesetzlichen Vorgaben zur Dokumentation und zur Kennzeichnungspflicht eingehalten werden.

In einer weiteren Ausführungsform befindet sich in dem Hohlkörper ein Deckel, der komplementär zur U-förmigen Kante des Entnahmelöffels ausgestaltet ist, beispielsweise in Form einer U-förmigen Platte. An diesem Deckel ist gegenüber seines abgerundeten Endes ein Ring oder Halbring vorgesehen, der mit dem Deckel fest verbunden ist und der in einer Nut an der Innenwand des Hohlkörpers drehbar gelagert ist. Der Deckel wird auf die U-förmige Kante des Entnahmelöffels dichtend aufgebracht, wenn Hohlkörper und Entnahmelöffel verbunden werden. Dies hat den Vorteil, dass das in der Vertiefung befindliche Kosmetikprodukt zusätzlich durch einen Deckel geschützt wird.

Bei einer weiteren vorteilhaften Ausführungsform weist der Hohlkörper der Vorrichtung einen gegenüber der Öffnung angeordneten Boden auf, die Öffnung und der Boden sind kreisförmig und der Durchmesser der Öffnung liegt im Bereich von 90-110 % des Durchmessers des Bodens. Die Dimensionen mit einem Durchmesser der Öffnung, der sich nur um 10 % vom Durchmesser des Bodens unterscheidet, verleihen der Vorrichtung einen ästhetischen Eindruck. Insbesondere kann die Vorrichtung im verbundenen Zustand und auch Entnahmelöffel und Hohlkörper jeweils gesondert auf ebenen Flächen alleine stehen. Dies erleichtert die Handhabung. Der Boden und die Öffnung können auch die Form eines Vielecks aufweisen, wobei die Ecken auf einem Kreisumfang mit entsprechendem Durchmesser liegen.

Vorzugsweise wird die erfindungsgemäße Vorrichtung aus 100 % recyceltem Kunststoff, insbesondere Post-Consumer-Recyclat (PCR) hergestellt. Es können auch Mischungen mit unterschiedlichen Anteilen an recyceltem Kunststoff zur Herstellung eingesetzt werden, bevorzugt ist aber reines Recyclat. Weiterhin eignen sich, unabhängig vom Anteil an Recyclat, unterschiedliche Polymerzusammensetzungen zur Herstellung der Vorrichtung, beispielsweise Polyethylen (PE), Polypropylen (PP), Polystyrol (PS) oder Polyethylenterephthalat (PET). Es können Mischungen verschiedener Polymerzusammensetzungen verwendet werden, bevorzugt sind aber sortenreine Kunststoffe. Vor allem bei einer Herstellung aus sortenreinen Kunststoffen kann die Vorrichtung ohne großen Aufwand wiederverwertet werden. Das Material hat vorzugsweise eine Zulassung als Primärverpackung für Lebensmittel. Es geht keine Wechselwirkungen mit der abgefüllten Produktprobe ein, sodass sich weder die Eigenschaften, das Aussehen und die Oberfläche der Vorrichtung, noch die Eigenschaften, die Textur oder der Geruch der abgefüllten Produktprobe bei einer sachgemäßen Anwendung verändern. Die sachgemäße Anwendung betrifft hier insbesondere einen Temperaturbereich von ca. 5 °C bis ca. 25 °C, in dem sowohl der Kunststoff der Vorrichtung als auch die kosmetische Produktprobe keine ihre Qualität mindernden Veränderungen erfahren.

Zusätzlich kann in die Vorrichtung nach Entnahme des Kosmetikprodukts und nach entsprechender Reinigung sofort wieder ein Kosmetikprodukt abgefüllt werden.

Dies hat insbesondere den Vorteil, dass die Vorrichtung umweltfreundlich und nachhaltig ist. Sie kann teilweise oder komplett aus recyceltem Material hergestellt werden und ist auch komplett recyclingfähig oder mehrfach verwendbar. Somit kann sie in verschiedener Weise am Recyclingkreislauf teilnehmen. Dies verringert den CO₂-Abdruck im Vergleich zu herkömmlichen Vorrichtungen für Kosmetikprodukte.

Aufgrund der Größe der Vorrichtung ist eine Wiederverwertung auch ökologisch sinnvoll. Insbesondere haben die bevorzugten Abmessungen des Entnahmelöffels und des Hohlkörpers den Vorteil, dass sie in üblichen Recyclingprozessen erkannt werden, aussortiert werden und nach dem Aussortieren aufbereitet und dem Materialkreislauf wieder zugeführt werden können.

Die erfindungsgemäße Vorrichtung kann weiterhin einen Identifikator aufweisen. Dieser Identifikator ermöglicht die eindeutige Identifizierung der Vorrichtung. Er kann beispielsweise ein Strichcode oder ein QR-Code sein. Der Identifikator kann dabei sowohl auf dem Entnahmelöffel, beispielsweise am Griff, als auch auf dem Hohlkörper aufgebracht sein. Bevorzugt ist beispielsweise eine Stelle im Bereich der Mantelfläche des Griffs. Ebenso kann der Identifikator im Bereich der Öffnung des Hohlkörpers oder im Bereich des gegenüber der Öffnung angeordneten Bodens des Hohlkörpers aufgebracht sein. Weiterhin ist es denkbar, dass die Außenwand des Hohlkörpers einen abgeflachten Bereich aufweist, auf den oder in dem der Identifikator auf- oder angebracht sein kann. Es ist insbesondere vorteilhaft, wenn bereits bei der Herstellung an oder in jeder Vorrichtung ein Identifikator angebracht wird. Vorzugsweise besteht der Identifikator aus dem gleichen Material wie die Vorrichtung selbst, wird beispielsweise als Gravur in das Material eingelasert oder aufgedruckt. Es kann aber auch ein Identifikator erst kurz vor der Abfüllung eines Kosmetikprodukts auf die Vorrichtung aufgebracht oder an der Vorrichtung angebracht werden. Dieser Identifikator kann bereits fertig am POS vorrätig sein oder er kann am POS erzeugt werden. So können beispielsweise am Ort der Abfüllung Etiketten mit Identifikator bereits vorliegen oder gedruckt werden und dann am Boden, im Bereich der Öffnung oder an einer anderen Stelle an der Außenwand des Hohlkörpers oder des Griffs des Entnahmelöffels angebracht werden. Weiterhin kann auch die Vorrichtung selbst bedruckt, graviert oder anders mit dem Identifikator gekennzeichnet werden.

Mithilfe des Identifikators kann die Vorrichtung eindeutig identifiziert und wiedererkannt werden. Auch die bereits genannte Recyclingfähigkeit kann über den Identifikator erleichtert werden, da auch Information zum Material und zur Verwertung der Vorrichtung durch den Identifikator hinterlegt sein kann.

Es ist insbesondere auch Gegenstand der vorliegenden Erfindung ein Verfahren zur Verfügung zu stellen zur Identifizierung und hygienischen Abfüllung eines Kosmetikprodukts aus einer bestimmten Charge für einen Nutzer in eine erfindungsgemäße Vorrichtung. Das erfindungsgemäße Verfahren weist zumindest folgende Schritte auf:
(1) Installieren einer Anwendungssoftware auf einem mobilen Endgerät des Nutzers,
(2) Öffnen der Anwendungssoftware,
(3) Erfassen der Information des Identifikators einer Vorrichtung nach Anspruch 12, Erfassen bestimmter Information zu dem abgefüllten oder abzufüllenden Kosmetikprodukt, nämlich mindestens der Chargenbezeichnung, des Namens der verantwortlichen Person, der Adresse der verantwortlichen Person, des Namens des Kosmetikprodukts, des Verwendungszwecks und der Haltbarkeit,
(4) digitales Verknüpfen der erfassten Informationen,
(5) Abfüllen einer vorgegebenen Menge des Kosmetikprodukts in die Vorrichtung.

Die Charge des Kosmetikprodukts ist immer vorgegeben und beschreibt aus welchem Herstellungszyklus das betreffende Produkt stammt. Jede Charge erhält eine eigene Chargenbezeichnung.

Die Anwendungssoftware wird beispielsweise von einer digitalen Vertriebsplattform mit einem einfachen Befehl, z.B. durch Antippen eines Symbols, auf einem mobilen Endgerät des Nutzers, einem Smartphone oder Tablet, installiert. Dieser Schritt kann bereits vorab durchgeführt werden, beispielsweise im Privatbereich des Nutzers. Es kann aber auch am POS erfolgen. Die Anwendungssoftware wird auf dem mobilen Endgerät geöffnet, damit anschließend die Informationen erfasst werden können.

Der Identifikator der Vorrichtung wird wie beschrieben beispielsweise bei der Herstellung der Vorrichtung oder unmittelbar vor Ort an- oder aufgebracht. Er enthält insbesondere die Information zur Wiedererkennung der Vorrichtung.

Die Information zu dem abgefüllten oder abzufüllenden Kosmetikprodukt betrifft mindestens die Chargenbezeichnung, den Namen der verantwortlichen Person, die Adresse der verantwortlichen Person, den Namen des Kosmetikprodukts, den Verwendungszweck und die Haltbarkeit. Es können aber auch weitere Informationen erfasst werden beispielsweise der EAN-Code, die Inhaltsstoffe, der Nenninhalt, die Warnhinweise, der Ort der Abfüllung, das Abfülldatum des Kosmetikprodukts.

Der Name der verantwortlichen Person ist der Name oder die Firma des Herstellers oder desjenigen, der das Produkt in den Verkehr bringt oder des Importeurs.

Mehrere gleiche Produkte können identische Informationen haben, beispielsweise den Namen des Kosmetikprodukts bzw. Produktnamen, den EAN-Code, die Inhaltsstoffe, den Namen und die Adresse der verantwortlichen Person, den Verwendungszweck, den Nenninhalt, die Warnhinweise, die Farb- und die Typkennzeichnung. Die Farbkennzeichnung oder auch Farbnummer ist bei Lippenstiften, Rouge u.a. das Unterscheidungsmerkmal von Produkten mit gleichem Namen aber in unterschiedlichen Farbtönen. Die Typkennzeichnung beschreibt die Rohstoffkonzentration z.B. in der alkoholischen Phase von Parfum, Eau de Parfum oder Eau de Toilette oder auch in der Formulierung einer Creme in den Ausführungen "light" oder "rich".

Diese Informationen können beispielsweise auf einer handelsüblichen Verpackung über einen Identifikator hinterlegt werden und mittels diesem abgerufen und erfasst werden. Bei vielen Kosmetikprodukten ist ein Identifikator bereits auf der handelsüblichen Verpackung vorhanden. Es handelt sich vorzugsweise um einen Strichcode oder einen QR-Code. Auch wenn das Kosmetikprodukt aus einem Tester abgefüllt wird, der keinen Identifikator aufweist, können die identischen Informationen von einer anderen handelsüblichen Verpackung des gleichen Produkts erfasst werden.

Manche Informationen, wie die Chargenbezeichnung, das Haltbarkeitsdatum bzw. Abfülldatum, der Nenninhalt, können für gleiche Produkte für jede Packung des Produkts, wie auch den Tester, individuell unterschiedlich sein. Diese werden daher von derjenigen Packung erfasst, aus der abgefüllt wird.

Die Erfassung der Informationen erfolgt in beliebiger Reihenfolge durch die Anwendungssoftware. Beispielsweise wird die Information durch Einlesen, Eintippen, Einscannen oder Fotografieren erfasst. Vorzugsweise erfolgt die Erfassung durch Einscannen oder Einlesen der entsprechenden Identifikatoren. Weiterhin kann Information, die nicht durch einen Identifikator hinterlegt ist, durch Eintippen oder Fotografieren erfasst werden. Es kann entsprechende Information, beispielsweise die Chargenbezeichnung des abgefüllten oder abzufüllenden Produkts, in ein entsprechendes Feld eingetippt und so von der Anwendungssoftware erfasst werden. In einem anderen Fall kann die entsprechende Information durch Fotografieren des Aufdrucks auf der jeweiligen Packung erfasst werden. Die Erfassung kann durch den Anbieter oder auch den Nutzer selbst vorgenommen werden, z.B. wenn der POS eine Drogerie ohne beratendes Personal ist.

Es werden mindestens die Information des Identifikators der Vorrichtung und die gesetzlich vorgeschriebenen Informationen zu dem Kosmetikprodukt erfasst. Es können aber auch weitere Informationen erfasst werden.

So ist es vorteilhaft, wenn zusätzlich eine Information über den Zeitpunkt und den Ort der Abfüllung erfasst wird. Dies kann automatisch von der Anwendungssoftware bei der Erfassung der Information erfolgen.

Weiterhin ist es möglich, Information über die Identität des Anbieters zu erfassen. Diese kann beispielsweise eingetippt weden oder über das Einlesen oder Einscannen eines entsprechenden Identifikators erfolgen. Hierzu erstellt der Anbieter einen Identifkator, der Information zu dem Namen und der Adresse des POS, gegebenenfalls zu einzelnen Personen wie Angestellten, enthält und die Information dieses Identifikators wird erfasst.

Die erfassten Informationen werden in der Anwendungssoftware digital verknüpft. Hierbei werden zumindest die Information des Identifikators der Vorrichtung und die erfassten Informationen zu dem abgefüllten oder abzufüllenden Kosmetikprodukt verknüpft. Auch alle weiteren erfassten Informationen können digital verknüpft werden.

Zusätzlich können in der Anwendungssoftware produktbezogene Informationen, z.B. Anwendungsinformationen, Neuerscheinungen, Werbematerial, mit den erfassten Informationen zu dem abgefüllten oder abzufüllenden Kosmetikprodukt verknüpft werden.

Der Anbieter selbst muss dabei die Anwendungssoftware nicht auf einem eigenen Gerät zur Verfügung stellen oder nutzen, er muss lediglich sicherstellen, dass der Nutzer die Anwendungssoftware installiert hat und der Anbieter oder der Nutzer müssen die beschriebenen Informationen erfassen.

Das Kosmetikprodukt wird in die Vorrichtung abgefüllt. Dieser Schritt kann zu einem beliebigen Zeitpunkt vor oder nach den anderen Schritten erfolgen. Es muss dabei gewährleistet sein, dass keine Verwechslung auftreten kann.

Hierzu wird aus einem Tester oder einer handelsüblichen Verpackung in Abhängigkeit von den Abmessungen der Vertiefung des Entnahmelöffels eine Menge, beispielsweise ca. 3ml, in die Vorrichtung abgefüllt. Hierzu werden Entnahmelöffel und Hohlkörper benutzt. Die Entnahme erfolgt aus einem Tiegel mit Hilfe des Kopfbereich des Löffels. Cremige Texturen aus Tuben oder Pumpflakons werden direkt in den Löffel gegeben. Flüssige Texturen aus Pumpflakons oder anderen Behältnissen oder lose Puder werden in die Vertiefung des Entnahmelöffels oder direkt in den Hohlkörper gegeben. Feste Texturen (gepresste Puder, Lippenstift oder andere Stifte) werden mit Hilfe der U-förmigen Kante des Löffels entnommen und so abgefüllt. Texturen auf Applikatoren, wie beispielsweise Lipgloss, können mit den Rändern des Löffels abgestrichen werden.

Die Abfüllung erfolgt hygienisch, indem sie ohne Berührung der Textur und ohne Berührung der Vertiefung des Entnahmelöffels oder des Innenraums des Hohlkörpers vorgenommen werden kann. Der Entnahmelöffel wird anschließend in den Hohlkörper eingebracht und mit ihm verbunden. Die dicht verschlossene und transportsichere Vorrichtung wird an den Nutzer zur Anwendung zuhause übergeben.

Die Anwendungssoftware kann zusätzlich verschiedene Funktionen erfüllen. So ist die Dokumentation des abgefüllten Kosmetikprodukts möglich und dessen Zuordnung zu genau derjenigen Vorrichtung, in die die Abfüllung erfolgt. Hierbei können die Informationen übersichtlich angeordnet werden und dabei alle jeweils aktuellen gesetzlichen Vorgaben zur Dokumentation und Kennzeichnungspflicht erfüllt werden. Bei mehreren, für einen Nutzer abgefüllten Kosmetikprodukten ist eine korrekte Unterscheidung und eindeutige Zuordnung zu der das Kosmetikprodukt enthaltenden Vorrichtung aufgrund des Identifikators der jeweiligen Vorrichtung möglich. Weiterhin ist auch bei mehreren Abfüllungen des gleichen Kosmetikprodukts in unterschiedliche Vorrichtungen eine Unterscheidung der Abfüllungen möglich.

In der Anwendungssoftware können für den Nutzer weitere produktbezogene Informationen abrufbar hinterlegt werden, wie beispielsweise Hilfe und Unterstützung zu dem jeweils abgefüllten Produkt in Form von allgemeinen Anwendungsvideos, zur Entnahme des Kosmetikprodukts und zur Anwendung verschiedener Texturen aus der Vertiefung des Entnahmelöffels. Der Nutzer kann durch Vorzeigen der Anwendungssoftware auf seinem mobilen Endgerät die für ihn erfolgten Abfüllungen dokumentieren. Es können ihm aufgrund seiner Abfüllungshistorie zielgerichtet Rabatte eingeräumt oder weitere Empfehlungen ausgesprochen werden.

Weiterhin können in der Anwendungssoftware produktbezogene Informationen, Empfehlungen und Bewerbung für weitere, auf das abgefüllte Produkt abgestimmte Kosmetikprodukte erhalten werden.

Über die Anwendungssoftware kann der Nutzer außerdem an den Verkauf des abgefüllten oder eines durch die Anwendungssoftware vorgschlagenen Kosmetikprodukts in handelsüblicher Menge und Verpackung weitergeleitet werden. Dies kann derjenige Anbieter sein, bei dem in der Anwendungssoftware das Kosmetikprodukt mit der Vorrichtung digital verknüpft und die Vorrichtung mit dem Kosmetikprodukt befüllt wurde. Außerdem kann die Anwendungssoftware den Nutzer auch auf online-Angebote oder andere Händlershops hinweisen.

Es kann in der Anwendungssoftware auch die Möglichkeit angeboten werden, dass der Nutzer seine Erfahrung mit dem jeweiligen Kosmetikprodukt beispielsweise über einen vorgegebenen Fragenkatalog, über individuelle Erfahrungsberichte oder über Fotos, die auch den Zustand vor und nach erfolgter Anwendung zeigen, dokumentiert.

Es ist besonders vorteilhaft, dass durch dieses Verfahren beliebige Kosmetikprodukte in die Vorrichtung abgefüllt werden können. Das Verfahren macht die Abgabe von Produktproben sehr flexibel. Anbieter und Nutzer können jederzeit eine beliebige Produktprobe abfüllen und der Nutzer kann diese zuhause testen. Somit entfällt die Herstellung von Produktproben in kleinen Tuben, Miniflakons, Sachets oder ähnlichem. Es müssen auch am POS keine Produktproben unterschiedlicher Produkte mehr vorrätig gehalten werden, da jederzeit alles in eine erfindungsgemäße Vorrichtung abgefüllt werden kann. Dieses Verfahren hat zusätzlich den Vorteil, dass Abfall vermieden wird, da die Vorrichtung recyclingfähig ist, die bisher bekannten Verpackungen von Produktproben sind dies in der Regel nicht.

Darüber hinaus können das erfindungsgemäße Verfahren und die erfindungsgemäße Vorrichtung auch für Proben aus anderen Bereichen, zum Beispiel für Lebensmittelproben, Proben von Nahrungsergänzungsmitteln, Futtermittelproben, individuelle Wandfarben und vieles mehr verwendet werden.

Insbesondere kann das erfindungsgemäße Verfahren noch weitere Schritte beinhalten, indem das Anlegen eines Profils des Nutzers und das Erfassen der Information zu diesem Profil durchgeführt werden. Diese Schritte können an beliebiger Stelle nach Schritt (2) durchgeführt werden. Beispielsweise kann ein Profil bereits zuhause durch den Nutzer erstellt werden, bevor dieser den POS aufsucht. In diesem Profil können individuelle Daten des Nutzers hinterlegt werden. Die Information eines Benutzernames und einer zugehörigen E-Mail-Adresse muss hinterlegt werden. Dadurch kann der Nutzer eindeutig identifiziert werden. Weiterhin können im Profil Name, Adresse, Geschlecht und Alter, sowie Hautbeschaffenheit, Hautzustand, Haarfarbe, Haarbeschaffenheit und Augenfarbe, eventuelle Unverträglichkeiten gegenüber bestimmten Inhaltsstoffen, Präferenzen für bestimmte Marken oder Hersteller und andere kosmetikrelevante Daten des Nutzers hinterlegt werden. Weiterhin können in dem Profil des Nutzers verschiedene Vorrichtungen mit jeweils darin abgefüllten Kosmetikprodukten angelegt, archiviert und verwaltet werden.

Durch die digitale Verknüpfung der erfassten Informationen zu Vorrichtung und abgefülltem Kosmetikprodukt und gegebenenfalls dem Profil kann der Nutzer darüber hinaus in der Anwendungssoftware produktbezogene Informationen, Empfehlungen und Bewerbung für auf ihn individuell abgestimmte Kosmetikprodukte erhalten. Dies betrifft sowohl bereits für ihn in eine Vorrichtung abgefüllte Kosmetikprodukte, als auch andere Kosmetikprodukte, die im Zusammenhang mit den erfassten Informationen für den Nutzer von Interesse sein könnten.

In dem individuellen Nutzer-Profil können für den Nutzer zusätzlich verschiedene Funktionen vorgesehen werden. Es können beispielsweise:
- verschiedene Produktinformationen, beispielsweise als Packungsbeilage, Informationsvideo, oder über Branded Content abgerufen werden,
- personalisierte Rabatte angezeigt werden,
- eine Merkzettel-Funktion angezeigt werden, bei der weitere zum Testen vorgesehene Kosmetikprodukte vorgeschlagen werden, beispielsweise über die Anzeige von Notizen, das Speichern von Links, Fotos, Screenshots aus anderen Kanälen wie Instagram, Lifestyle Magazinen, YouTube,
- eine Bewertungs-Funktion genutzt werden, in der
   I. eine persönliche Bewertung, beispielsweise eine Sterne-Bewertung nach Anwendung des Kosmetikprodukts, eine Verknüpfung mit anderen Produkten, eine Angabe eines mit dem Test ersetzten, früher verwendeten Produkts oder
   II. eine Auswertung zum Teilen über die Anwendungssoftware mit anderen Nutzern, die ebenfalls Profile angelegt haben oder extern, bei der verschiedene Informationen, vorher/nachher-Fotos, Anwendungs-Videos mit Tipps und Tricks, Inspirationen und sonstige Notizen, möglich ist,
- eine Belieferung über ein Sofort-Kaufen-Funktionsfeld oder über Lieferdienste ausgelöst werden,
- eine Empfehlungs-Funktion angezeigt werden mit empfohlenen Produkten mit Kaufmöglichkeit oder mit Vorschlägen zu neuen, ergänzenden oder komplementären Produkten auf der Basis vom Nutzer getesteter, bewerteter oder notierter Produkte,
- individuelle Gestaltungsmöglichkeiten der Anwendungssoftware genutzt werden,
- ein ausführliches, individuelles Profil angelegt werden.

Weiterhin kann eine online/offline-Verknüpfung vorgesehen werden, bei der sich die Merkzettel-Funktion automatisch beim Betreten einer Filiale oder eines Händler Shops in der Anwendungssoftware aktiviert und den Merkzettel anzeigt.

In einer bevorzugten Ausgestaltung des erfindungsgemäßen Verfahrens kann in der Anwendungssoftware durch den Nutzer auf mindestens eine der erfassten Informationen zugegriffen werden und die damit digital verknüpften Informationen zu der Vorrichtung und dem darin abgefüllten Kosmetikprodukt abgerufen werden oder ihm angezeigt werden.

In einer weiteren bevorzugten Ausgestaltung des erfindungsgemäßen Verfahrens legt die Anwendungssoftware die erfassten Informationen und auch ihre digitale Verknüpfung in einer Cloud ab. Es werden mindestens die Information zu einer oder mehreren befüllten Vorrichtungen und die Informationen zu dem oder den abgefüllten Kosmetikprodukten abgelegt. Zusätzlich können Informationen zu Abfüllungszeitpunkt und Abfüllungsort und zur Person des Anbieters, zu den mobilen Endgeräten, auf denen die Anwendungssoftware installiert ist, sowie gegebenenfalls die Informationen der zugehörigen Nutzerprofile abgelegt werden. Es können auch weitere beispielsweise produktbezogene Informationen in der Cloud abgelegt und mit den erfassten Informationen verknüpft werden.

Auf die Informationen in der Cloud kann nun der Nutzer, der Anbieter oder ein berechtigter Dritter zugreifen.

Durch Zugriff auf mindestens eine der erfassten Informationen in der Cloud können von dem Nutzer, dem Anbieter oder einem berechtigten Dritten die damit digital verknüpften Informationen aus der Cloud abgerufen oder angezeigt werden.

Durch Abruf aus der Cloud können nun die Informationen zu den Vorrichtungen, zu den Kosmetikprodukten sowie zu den Nutzerprofilen zu unterschiedlichen Zwecken ausgewertet werden. So kann beispielsweise vom Anbieter, von jedem anderen Händler oder von einem Hersteller von Kosmetikprodukten gezielt eine bestimmte Gruppe von Nutzerprofilen oder eine bestimmte Gruppe von Vorrichtungen, die mit den entsprechenden Kosmetikprodukten befüllt ist, ausgewählt werden und für Auswertungen oder Aktionen genutzt werden. Es können für den B2C-Bereich beispielsweise Pushkampagnen mit einer Benachrichtigung des Nutzers zu einem bestimmten Zeitpunkt nach Abfüllung des entsprechenden Kosmetikprodukts gestartet werden. Weiterhin können dem Nutzer zusätzliche Produkte empfohlen werden, die zu denjenigen in der mit seinem Profil verknüpften Vorrichtung passen. Hierbei sind Produkte denkbar, die insbesondere bezüglich des Verwendungszwecks, der Art der Anwendung, der Wirkung auf das Hautbild, o.ä. als Alternative oder als Ergänzung angewendet werden können.

Die in der Cloud abgelegten Informationen können für den B2B-Bereich zu anonymisierten Auswertungen, Beratungen und für allgemeines Monitoring genutzt werden.

Weiterhin ist es möglich, die Daten der Cloud im Rahmen der Business Intelligence beispielsweise für eine Gutschrift oder Bewertung des Umsatzes für den abfüllenden Anbieter oder für die Auswertung der vorgenommenen Abfüllungen in Abhängigkeit verschiedener Kriterien, wie der nationalen Anwendung, der regionalen Anwendung, der Abfüllung nach Produktgruppen, Marken zu nutzen.

Auch die Identifikation von Kundenkarteninhabern und die Integration von Daten über abgefüllte Kosmetikprodukte in einem Nutzer-Profil zur Vervollständigung der Ansprache des Nutzers und des Aufbaus und der Verbesserung einer Kundenbindung ist möglich.

Die Cloud ermöglicht darüber hinaus die Kommunikation mit bzw. die Erstellung von Schnittstellen zu anderen Systemen, wie z.B. dem CRM-System eines Anbieters oder eines anderen Händlers. Anwendungsfälle sind beispielsweise eine Rabattgewährung beim Kauf eines Kosmetikprodukts. Hier können die Rabatte vom Händler oder Anbieter individuell konfiguriert werden. Außerdem ist über die Kommunikation bzw. Erstellung von Schnittstellen eine Identifikation und/oder Integration von Informationen aus anderen Kundenkartenprofilen möglich, die bei manchen Anbietern und Händlern bereits vorliegen. Es ist auch möglich, die Umsätze des jeweiligen Kosmetikprodukts demjenigen Anbieter zuzurechnen, der mithilfe des erfindungsgemäßen Verfahrens das Produkt in die Vorrichtung abgefüllt hat.

Die Cloud kann auch als Basis für White Label Lösungen dienen, beispielsweise als Grundlage für die Erstellung einer Kunden-App, die auf einen Anbieter oder einen anderen Händler personalisiert ist.

Vorteilhafterweise wird es durch das erfindungsgemäße Verfahren und mit der erfindungsgemäßen Vorrichtung ermöglicht, dass der Anbieter und/oder der Nutzer selbst entscheiden können, welches Kosmetikprodukt als Produktprobe mitgenommen und getestet werden kann. Bisher war es nur möglich, dass vom Handel ausgewählte, vorverpackte Produktproben mitgegeben werden. Mit dem erfindungsgemäßen Verfahren und der erfindungsgemäßen Vorrichtung ist es nun möglich, den Nutzer individuell zu beraten und für ihn Kosmetikprodukte abzufüllen. Das Testen des Produkts erfolgt dabei unabhängig vom Point of Service (POS). Dies ist vorteilhaft, wenn ein Nutzer nicht am POS, wie vor Ort im kosmetischen Einzelhandel, testen möchte oder, wie im Online-Handel, nicht vor Ort testen kann.

Anhand der nachfolgenden Figuren soll eine erfindungsgemäße Vorrichtung und ein erfindungsgemäßes Verfahren näher erläutert werden, ohne die Erfindung auf die hier gezeigten, speziellen Ausführungsbeispiele einzuschränken.

Es zeigen:
- Figur 1: einen Längsschnitt durch einen Entnahmelöffel
- Figur 2: eine perspektivische Darstellung eines Entnahmelöffels
- Figur 3: eine Seitenansicht eines Hohlkörpers
- Figur 3a: einen Längsschnitt eines Hohlkörpers
- Figur 4: eine perspektivische Darstellung eines Hohlkörpers
- Figur 5: eine Detailansicht eines Trapezgewindes
- Figur 6: eine perspektivische Darstellung eines Deckels
- Figur 7: einen Längsschnitt eines Hohlkörpers mit Nut zur Aufnahme des Deckels
- Figur 8: eine schematische Darstellung des erfindungsgemäßen Verfahrens

### Figurenbezeichnung

- 10: Entnahmelöffel
- 11: Kopfbereich
- 12: Außengewinde
- 13: Griff
- 14: Sockelbereich
- 15: Verbindungsbereich
- 16: U-förmige Kante
- 17: Vertiefung
- 18: Dichtbereich
- 19: Hohlraum
- 20: Hohlkörper
- 21: Innenwand
- 22: Öffnung
- 23: Außenwand
- 24: Verbindungsbereich
- 25: Innengewinde
- 26: Deckel
- 27: Ring oder Halbring
- 28: Nut
- 30: Boden
- 40: Trapezgewinde
- 50: Kosmetikprodukt

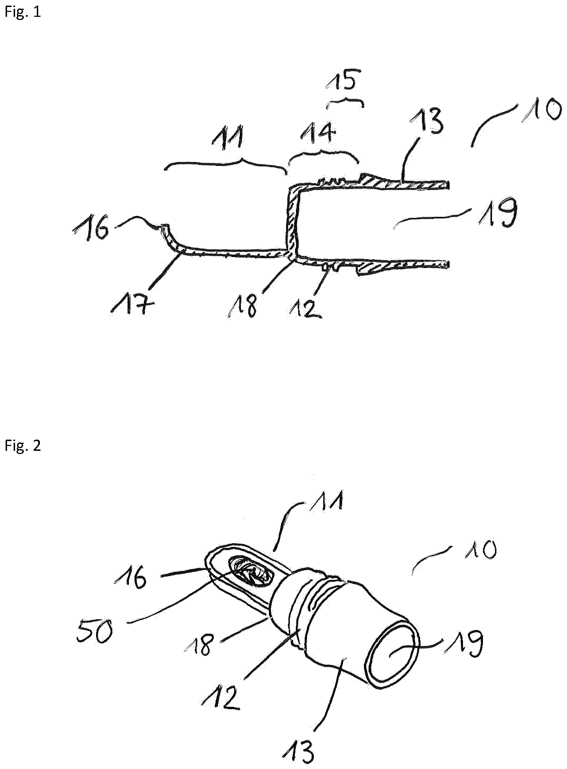

In Figur 1 ist ein Entnahmelöffel (10) im Längsschnitt abgebildet. Der Kopfbereich (11) weist eine Vertiefung (17) auf, in der sich das Kosmetikprodukt (50) nach seiner Abfüllung befindet. Am distalen Ende läuft die Vertiefung in der U-förmigen Kante (16) aus, am proximalen Ende ist der Kopfbereich (11) des Entnahmelöffels (10) mit dem Sockelbereich (14) verbunden. Der Sockelbereich (14) weist einen abgeschrägten Bereich auf, der einen Dichtbereich (18) darstellt. Der Dichtbereich (18) wird entlang seines Umfangs beim Verbinden von Entnahmelöffel (10) und Hohlkörper (20) an die Innenwand (21) des Hohlkörpers (20) gepresst. Der Dichtbereich (18) verhindert, dass ein abgefülltes Kosmetikprodukt (50), falls es während des Transports und der Aufbewahrung nicht in der Vertiefung (17) verbleibt, das Innen- und das Außengewinde (25, 12) verschmutzt. Der Griff (13) schließt sich direkt an den Sockelbereich (14) an und dient dazu, dass der Entnahmelöffel (10) in diesem Bereich von Nutzer und Anbieter angefasst werden kann. Als Verbindungsbereich (15) ist bei dem in Figur 1 dargestellten Entnahmelöffel (10) ein Außengewinde (12) vorgesehen. Der Sockelbereich (14) und der Griff (13) sind in Figur 1 derart ausgestaltet, dass sie zusammen einen Hohlraum (19) bilden. In diesen Hohlraum (19) kann beispielsweise nach Abfüllung eines Kosmetikprodukts die diesem Produkt zugeordnete Information in Form eines Beipackzettels eingefügt werden.

Figur 2 zeigt eine perspektivische Ansicht der in Figur 1 abgebildeten Ausführungsform.

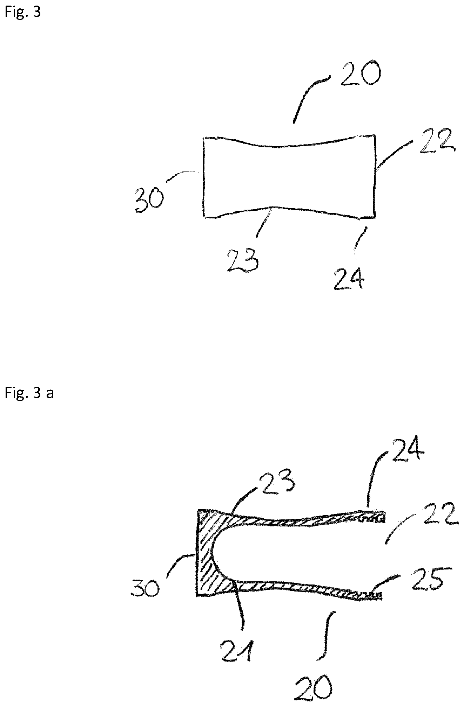

Figur 3 zeigt eine Seitenansicht eines Hohlkörpers (20). An einer Seite befindet sich ein Boden (30), an der anderen Seite eine Öffnung (22). In der abgebildeten Form hat der Hohlkörper (20) eine hyperboloid ausgestaltete Außenwand (23), wobei sich an den hyperboloiden Bereich an beiden Enden ein zylidrischer Bereich anschließt. Auf diese Weise erhält der Hohlkörper (20) eine handschmeichlerische Gestaltung. Der Boden (30) kann als Standfläche genutzt werden.

Figur 3a zeigt einen Längsschnitt durch einen Hohlkörper (20). Im Bereich der Öffnung (22) ist an der Innenwand (21) der Verbindungsbereich (24) mit einem Innengewinde (25) angeordnet. Gegenüber der Seite der Öffnung (22) befindet sich der Boden (30). Die Außenwand (23) ist im Bereich des Bodens und im Verbindungsbereich (24) zyliderförmig, im Bereich zwischen Boden (30) und Verbindungsbereich (24) ist sie hyperboloid ausgeformt. Die Innenwand (21) ist ebenfalls hyperboloid ausgeformt.

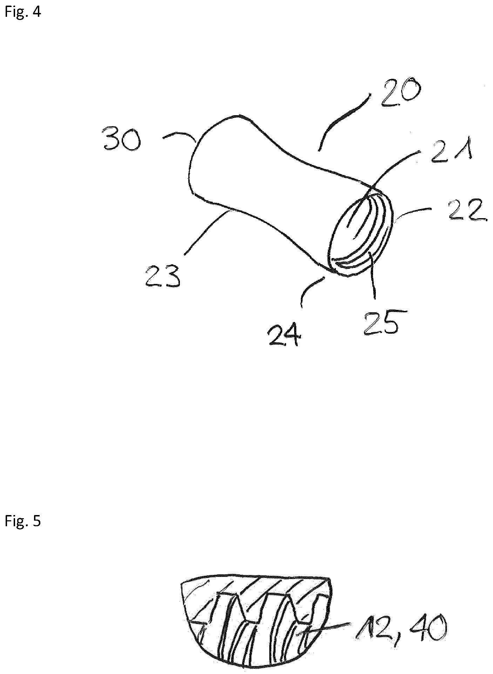

In Figur 4 ist der Hohlkörper in perspektivischer Ansicht dargestellt. An der Innenwand (21) ist im Bereich der Öffnung (22) ein Innengewinde (25) vorhanden. Durch Einstecken des Entnahmelöffels (10) in die Öffnung (22) des Hohlkörpers (20), Verbinden und Verschrauben des Innengewindes (25) mit dem Außengewinde (12) ist eine feste und lösbare Verbindung der beiden Teile der Vorrichtung herstellbar. Diese Verbindung ist dicht, sodass das abgefüllte Kosmetikprodukt in der Vorrichtung verbleibt, und die Gewindebereiche (12, 25) nicht verschmutzt werden.

Figur 5 zeigt einen vergrößerten Ausschnitt eines Trapezgewindes. Der Flankenwinkel beträgt 30 °.

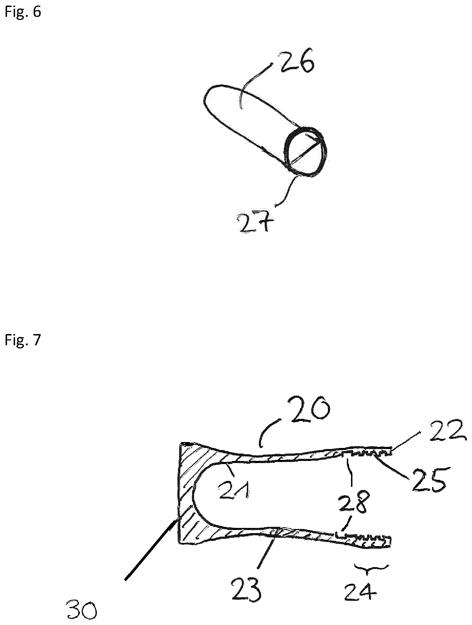

In Figur 6 und Figur 7 sind ein Deckel (26) und ein Hohlkörper (20) einer erfindungsgemäßen Vorrichtung mit einem Deckel (26) abgebildet. Der Deckel (26) besteht aus einer U-förmigen Platte, deren Umfang die U-förmige Kante (16) nachbildet. Am geraden Ende ist ein Ring (27) senkrecht zur Ebene des Deckels befestigt. Dieser Ring (27) läuft in montiertem Zustand in der Nut (28) an der Innenwand (21) des Entnahmelöffels (20). Er ist drehbar gelagert und kann sich während des Verschraubens von Entnahmelöffel (10) und Hohlkörper (20) auf die Vertiefung (17) des Entnahmelöffels (10) auflegen. Dabei wird diese dicht verschlossen.

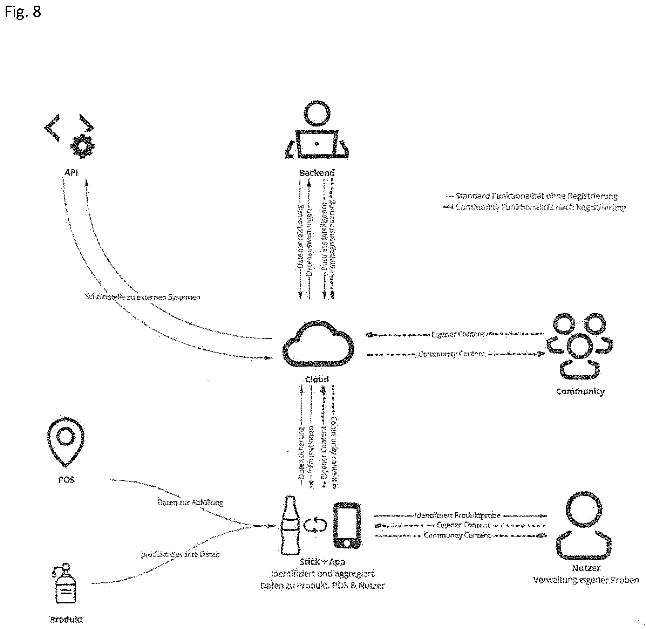

Im Folgenden wird in Zusammenhang mit Figur 8 eine bevorzugte Ausführungsform des erfindungsgemäßen Verfahrens beschrieben. Figur 8 zeigt ein Schema des Zusammenwirkens in diesem Verfahren von Nutzer, Anbieter (POS), Kosmetikprodukt, Vorrichtung und Anwendungssoftware (Stick und App), Cloud, einem berechtigten Dritten (Backend) und anderen beteiligten Systemen (API, Community).

Dabei finden zunächst nicht abgebildete Vorgänge statt. So erfolgt zwischen Anbieter und Nutzer ein Beratungsgespräch, beispielsweise zum Thema Haut- und Körperpflege, Auswahl und Anwendung von Make-up oder Empfehlung von Düften. Dieses Beratungsgespräch ist nicht abgebildet, es ergibt sich aus dem Zusammenwirken des Anbieters und des Nutzers.

Anschließend oder im Verlauf dieses Gesprächs werden diejenigen Kosmetikprodukte (Produkt), die in Frage kommen und getestet werden sollen, vom Anbieter oder vom Nutzer selbst für den Nutzer zum Probieren zuhause in die erfindungsgemäße Vorrichtung (Stick) abgefüllt. Dazu wird das betreffende Kosmetikprodukt im entsprechenden Tester (Produkt) und eine Vorrichtung (Stick) benötigt. In der Figur 8 ist ein Kosmetikprodukt abgebildet. Der Nutzer benötigt die Anwendungssoftware (App) auf einem mobilen Endgerät, hier einem Smartphone oder Tablet.

Nicht abgebildet ist der Vorgang der Abfüllung, bei dem in diesem Beispiel der Anbieter dem Nutzer das Produkt zeigt, das er abfüllen wird. Er nennt Namen, Hersteller bzw. verantwortliche Person und Verwendungszweck und macht auf die Inhaltsstoffe gemäß INCI Bezeichnungen aufmerksam. Der Anbieter füllt aus dem Tester eine Menge von ca. 3ml in den Stick ab.

Der Anbieter arbeitet hygienisch ohne Berührung der Textur. Der dicht verschlossene und transportsichere Stick wird an den Nutzer zur Anwendung zuhause übergeben.

Der Stick im Beispiel weist bereits herstellungsseitig einen gelaserten Barcode auf.

Der Stick ist "digital" in dem Sinne, dass der im Material eingebrachte Identifikator als "Schlüssel" wirkt zur vollständigen Nutzung der durch die Anwendungssoftware angebotenen Funktionen. Mit Hilfe der Information des Identifikators ist der Stick eindeutig identifizierbar.

Der Nutzer installiert und öffnet im Rahmen der Abfüllung die Anwendungssoftware (App) auf einem mobilen Endgerät. Der Nutzer wird nun durch eine Checkliste geführt, mit Hilfe derer alle notwendigen Informationen aufgenommen werden können. Diese sind vor allem die Erfassung des Identifikators der Vorrichtung, die Erfassung der Informationen zum Kosmetikprodukt, die Chargennummer des Testers. Die Erfassung der Informationen zum Kosmetikprodukt erfolgt durch Erfassung des Barcodes eines entsprechenden Originalprodukts, das dem Produkt im Tester entspricht. Dieser Barcode beinhaltet die EAN, den Namen des Produkts, den Namen und die Adresse der verantwortlichen Person, die Inhaltsstoffe gemäß INCI Bezeichnungen. Der entsprechende Verwendungszweck wird durch Setzen eines Häkchens bei den Begriffen Lippen, Augen, Gesicht, Körper, Hände per Auswahl festgelegt. Das Abfülldatum wird automatisch in der Anwendungssoftware erfasst und dient gleichzeitig zur Berechnung der Mindesthaltbarkeit. Auch der Abfüllort wird automatisch erfasst.

Nach Abschluss der Eingabe erhält der Nutzer die abgefüllte Produktprobe.

Zuhause identifiziert der Nutzer mithilfe der App den Code des Sticks und erhält Angaben über das darin abgefüllte Produkt angezeigt. Der Nutzer testet das Produkt, indem er den Stick öffnet und die abgefüllte Textur entnimmt. Dies geschieht entweder durch Entnahme aus der Vertiefung des Löffels oder aus dem Hohlkörper mit den Fingern oder unter Zuhilfenahme kosmetischer Hilfsmittel (Wattepad, Q-Tipp, Pinsel, Applikator o.ä.). Dabei ist der Stick aufgrund seiner Form mit den Fingern vollständig entleerbar. Es verbleibt kein Rest in Vertiefung des Entnahmelöffels oder Hohlkörper.

In der App kann der Nutzer allgemeine Hinweise und Hilfestellungen zur Entnahme und Anwendung verschiedener Texturen aus dem Stick finden.

Über die Anwendungssoftware erfolgt ein Datenaustausch mit der Cloud, von welcher ein weiterer Austausch zur Gruppe der Nutzer (Community) und zu anderen externen Systemen (API) stattfinden kann. Als Backend wird ein berechtigter Dritter, z.B. Verwalter der App dargestellt, der aus der Cloud ebenfalls Information entnehmen kann, oder dort Informationen zuführen, ergänzen oder redigieren kann. Er kann diese Information beispielsweise an den Anbieter weitergeben oder für Business-Intelligence-Maßnahmen oder Datenauswertung nutzen. Mit denjenigen Nutzern, die ein Profil in der App angelegt haben, kann entlang der durchgezogenen und der gepunkteten Pfeile Information fließen, mit nicht registrierten Nutzern ist ein Austausch nur über die durchgezogenen Pfeile möglich.

In der Community kann der Nutzer über die Cloud vom Verwalter und/oder über die Schnittstelle bereit gestellte Informationen zum Produkt und seiner Anwendung abrufen und ansehen (z.B. Werbefilm, Beipackzettel, Anwendungsvideos). Er kann Erfahrungen mit der Anwendung des Produktes festhalten. Dazu zählt eine Bewertung der allgemeinen Zufriedenheit per 5-Sterne-Rating. Weiterhin kann kann per Foto ein "vorher/nachher" Status festgehalten werden, es können Notizen gespeichert werden, das Produkt kann gemerkt werden und es kann individuell durch den Nutzer entschieden werden, ob und welche Erfahrungen mit dem Produkt, insbesondere die Bewertung oder das "vorher/nachher" Bild veröffentlicht und geteilt werden.

Schließlich kann der Nutzer bei Gefallen durch Drücken eines "Kauf" Buttons in der App einen Kauf auslösen (nicht abgebildet).

## Patentansprüche

1. Vorrichtung zur hygienischen Abfüllung, zum Transport und zur Aufbewahrung eines Kosmetikprodukts (50), umfassend:
i. einen Entnahmelöffel (10), der einen Kopfbereich (11) mit einer U-förmigen Kante (16) und einer Vertiefung (17) zur Aufnahme des Kosmetikprodukts (50) und einen Griff (13) aufweist,
ii. einen Hohlkörper (20) mit einer Außenwand (23), einer Innenwand (21) und einer Öffnung (22), durch welche der Entnahmelöffel (10) in den Hohlkörper (20) eingesteckt werden kann,
iii. wobei der Hohlkörper (20) und der Entnahmelöffel (10) lösbar miteinander verbunden werden können,
iv. wobei die Innenwand (21) des Hohlkörpers (20) und die U-förmige Kante (16) des Kopfbereichs (11) des Entnahmelöffels (10) derart ausgestaltet sind, dass im verbundenen Zustand von Hohlkörper (20) und Entnahmelöffel (10) die U-förmige Kante (16) des Entnahmelöffels (10) entlang der Innenwand (21) des Hohlkörpers (20) anliegt, **dadurch gekennzeichnet**
v. **dass** die Ausgestaltung der U-förmigen Kante und der Innenwand verhindern, dass das abgefüllte Kosmetikprodukt nach der Abfüllung während Transport und Aufbewahrung von der Vertiefung des Entnahmelöffels an die Außenseite oder den unteren Bereich der Innenwand gelangt.

2. Vorrichtung nach Anspruch 1,
wobei die Innenwand (21) des Hohlkörpers (20) und die Vertiefung (17) des Kopfbereichs (11) des Entnahmelöffels (10) derart ausgestaltet sind, dass im verbundenen Zustand die Außenseite des Kopfbereichs (11) des Entnahmelöffels (10) an der Innenwand (21) des Hohlkörpers (20) anliegt.

3. Vorrichtung nach einem der vorhergehenden Ansprüche,
wobei der Entnahmelöffel (10) einen zwischen dem Kopfbereich (11) und dem Griff (13) angeordneten Sockelbereich (14) aufweist, der einen dem Griff (13) zugewandten Verbindungsbereich (15) und einen dem Kopfbereich (11) zugewandten Dichtbereich (18) aufweist und der Hohlkörper (20) einen an der Innenwand (21) im Bereich der Öffnung (22) angeordneten weiteren Verbindungsbereich (24) aufweist,
wobei die Verbindungsbereiche derart ausgestaltet sind, dass die lösbare Verbindung durch das Verbinden dieser Verbindungsbereiche miteinander erfolgt und der Dichtbereich (18) des Entnahmelöffels im verbundenen Zustand dichtend gegen die Innenwand des Hohlkörpers gepresst wird.

4. Vorrichtung nach Anspruch 3,
wobei der Verbindungsbereich (15) des Entnahmelöffels (10) ein Außengewinde (12) und der Verbindungsbereich (24) des Hohlkörpers (20) ein Innengewinde (25) aufweist.

5. Vorrichtung nach Anspruch 4,
wobei das Innengewinde (25) und das Außengewinde (12) als Trapezgewinde (40) mit einem Flankenwinkel von mindestens 28° und höchstens 32 °, insbesondere von 30 °, ausgestaltet sind und im verbundenen Zustand dicht abschließen.

6. Vorrichtung nach einem der vorhergehenden Ansprüche,
wobei die Außenwand (23) des Hohlkörpers (20) hyperboloid, zylinderförmig und/oder konisch zulaufend ausgestaltet ist.

7. Vorrichtung nach einem der vorhergehenden Ansprüche,
wobei die Vertiefung (17) des Kopfbereichs (11) des Entnahmelöffels (10) ein Füllvolumen von 1-4 ml aufweist.

8. Vorrichtung nach einem der vorhergehenden Ansprüche,
wobei die Vertiefung des Entnahmelöffels ergonomisch geformt ist und eine Tiefe von 3 -10 mm, eine Breite von 12 - 17 mm und eine Länge von 25 - 40 mm aufweist.

9. Vorrichtung nach Anspruch 3, 4 oder 5,
oder nach einem der Ansprüche 6 bis 8, soweit direkt oder indirekt auf Anspruch 3 rückbezogen,
wobei der Sockelbereich (14) und der Griff (13) zusammen einen zumindest teilweise von außen zugänglichen Hohlraum (19) bilden.

10. Vorrichtung nach einem der vorhergehenden Ansprüche,
wobei in dem Hohlkörper (20) ein zur U-förmigen Kante (16) des Entnahmelöffels (10) komplementärer Deckel (26) mit einem Ring oder Halbring (27) vorgesehen ist, der in einer Nut (28) an der Innenwand (21) des Hohlkörpers drehbar gelagert ist, der auf die U-förmige Kante (16) des Entnahmelöffels (10) dichtend aufbringbar ist, indem Hohlkörper (20) und Entnahmelöffel (10) verbunden werden.

11. Vorrichtung nach einem der vorhergehenden Ansprüche,
wobei der Hohlkörper (20) einen gegenüber der Öffnung (22) angeordneten Boden (30) aufweist, die Öffnung (22) und der Boden (30) kreisförmig sind und der Durchmesser der Öffnung (22) im Bereich von 90 bis 110% des Durchmessers des Bodens (30) liegt.

12. Vorrichtung nach einem der vorhergehenden Ansprüche,
wobei die Vorrichtung einen Identifikator aufweist.

13. Verfahren zur Identifizierung und hygienischen Abfüllung eines Kosmetikprodukts aus einer bestimmten Charge für einen Nutzer mit folgenden Schritten:
(1) Installieren einer Anwendungssoftware auf einem mobilen Endgerät des Nutzers,
(2) Öffnen der Anwendungssoftware,
(3) Erfassen der Information des Identifikators einer Vorrichtung nach Anspruch 12, Erfassen bestimmter Information zu dem abgefüllten oder abzufüllenden Kosmetikprodukt, nämlich mindestens der Chargenbezeichnung, des Namens der verantwortlichen Person, der Adresse der verantwortlichen Person, des Namens des Kosmetikprodukts, des Verwendungszwecks und der Haltbarkeit,
(4) digitales Verknüpfen der erfassten Informationen,
(5) Abfüllen einer vorgegebenen Menge des Kosmetikprodukts in die Vorrichtung.

14. Verfahren nach Anspruch 13,
wobei nach Schritt (2) als weitere Schritte das Anlegen eines Profils des Nutzers und das Erfassen der Information zu diesem Profil durchgeführt werden.

15. Verfahren nach Anspruch 13 oder 14,
wobei in der Anwendungssoftware durch den Nutzer durch Zugriff auf mindestens eine der erfassten Informationen die damit digital verknüpften Informationen zu der Vorrichtung und dem darin abgefüllten Kosmetikprodukt abgerufen werden oder ihm angezeigt werden.

16. Verfahren nach Anspruch 13 oder 14,
wobei die Anwendungssoftware die erfassten Informationen und die digitale Verknüpfung in einer Cloud ablegt und durch Zugriff auf mindestens eine der erfassten Informationen die damit digital verknüpften Informationen aus der Cloud abgerufen oder angezeigt werden können.

## Claims

1. A device for the hygienic filling, transport and storage of a cosmetic product (50), comprising:
i. a removal spoon (10) having a head region (11) having a U-shaped edge (16) and a recess (17) for receiving the cosmetic product (50) and a handle (13),
ii. a hollow body (20) having an outer wall (23), an inner wall (21) and an opening (22) through which the removal spoon (10) can be inserted into the hollow body (20),
iii. wherein the hollow body (20) and the removal spoon (10) can be detachably connected to each other,
iv. wherein the inner wall (21) of the hollow body (20) and the U-shaped edge (16) of the head region (11) of the removal spoon (10) are designed in such a way that, when the hollow body (20) and the removal spoon (10) are in the connected state, the U-shaped edge (16) of the removal spoon (10) rests along the inner wall (21) of the hollow body (20),
**characterized in that**
v. the design of the U-shaped edge and the inner wall prevent the filled cosmetic product from reaching the outside or the lower region of the inner wall from the recess of the removal spoon during transport and storage after filling.

2. The device according to claim 1,
wherein the inner wall (21) of the hollow body (20) and the recess (17) of the head region (11) of the removal spoon (10) are designed in such a way that, in the connected state, the outer side of the head region (11) of the removal spoon (10) rests against the inner wall (21) of the hollow body (20).

3. The device according to one of the preceding claims,
wherein the removal spoon (10) has a base region (14) which is arranged between the head region (11) and the handle (13) and which has a connecting region (15) facing the handle (13) and a sealing region (18) facing the head region (11), and the hollow body (20) has a further connecting region (24) arranged on the inner wall (21) in the region of the opening (22), wherein the connecting regions are designed in such a way that the detachable connection is made by connecting these connecting regions to one another and the sealing region (18) of the removal spoon is pressed against the inner wall of the hollow body in a sealing manner in the connected state.

4. The device according to claim 3,
wherein the connecting region (15) of the removal spoon (10) has an external thread (12) and the connecting region (24) of the hollow body (20) has an internal thread (25).

5. The device according to claim 4,
wherein the internal thread (25) and the external thread (12) are designed as a trapezoidal thread (40) with a flank angle of at least 28° and at most 32, in particular of 30, and are sealed in the connected state.

6. The device according to one of the preceding claims,
wherein the outer wall (23) of the hollow body (20) is designed to be hyperboloid, cylindrical and/or tapered.

7. The device according to one of the preceding claims,
wherein the recess (17) of the head region (11) of the withdrawal spoon (10) has a filling volume of 1-4 ml.

8. The device according to one of the preceding claims,
wherein the recess of the removal spoon is ergonomically shaped and has a depth of 3-10 mm, a width of 12-17 mm and a length of 25-40 mm.

9. The device according to claim 3, 4 or 5,
or according to one of claims 6 to 8, insofar as directly or indirectly referred back to claim 3,
wherein the base region (14) and the handle (13) together form a cavity (19) which is at least partially accessible from the outside.

10. The device according to one of the preceding claims,
wherein a lid (26) complementary to the U-shaped edge (16) of the removal spoon (10) is provided in the hollow body (20) with a ring or half-ring (27) which is rotatably mounted in a groove (28) on the inner wall (21) of the hollow body and can be fitted in a sealing manner on the U-shaped edge (16) of the removal spoon (10) by connecting the hollow body (20) and the removal spoon (10).

11. The device according to any one of the preceding claims,
wherein the hollow body (20) has a base (30) arranged opposite the opening (22), the opening (22) and the base (30) are circular and the diameter of the opening (22) is in the range from 90 to 110% of the diameter of the base (30).

12. The device according to any one of the preceding claims,
wherein the device comprises an identifier.

13. A method for the identification and hygienic filling of a cosmetic product from a specific batch for a user, comprising the following steps:
(1) installing an application software on a mobile device of the user,
(2) open the application software,
(3) recording the information of the identifier of a device according to claim 12, recording certain information about the filled cosmetic product or the cosmetic product to be filled, namely at least the batch designation, the name of the responsible person, the address of the responsible person, the name of the cosmetic product, the intended use and the shelf life,
(4) digital linking of the recorded information,
(5) Filling a predetermined amount of the cosmetic product into the device.

14. The method according to claim 13,
wherein, after step (2), further steps comprise creating a profile of the user and recording the information relating to this profile.

15. The method according to claim 13 or 14,
wherein in the application software, by accessing at least one of the recorded information, the user retrieves or is shown the digitally linked information on the device and the cosmetic product filled therein.

16. The method according to claim 13 or 14,
wherein the application software stores the recorded information and the digital link in a cloud and the digitally linked information can be retrieved or displayed from the cloud by accessing at least one of the recorded information.

## Revendications

1. Dispositif de remplissage hygiénique, de transport et de stockage d'un produit cosmétique (50), comprenant :
i. une cuillère de prélèvement (10) qui comprend une zone de tête (11) avec un bord en forme de U (16) et un renfoncement (17) destiné à recevoir le produit cosmétique (50), et un manche (13),
ii. un corps creux (20) avec une paroi extérieure (23), une paroi intérieure (21) et une ouverture (22) à travers laquelle la cuillère de prélèvement (10) peut être insérée dans le corps creux (20),
iii. dans lequel le corps creux (20) et la cuillère de prélèvement (10) peuvent être reliés l'un à l'autre de manière amovible,
iv. dans lequel la paroi intérieure (21) du corps creux (20) et le bord en forme de U (16) de la zone de tête (11) de la cuillère de prélèvement (10) sont configurés de telle sorte qu'à l'état relié du corps creux (20) et de la cuillère de prélèvement (10), le bord en forme de U (16) de la cuillère de prélèvement (10) s'applique le long de la paroi intérieure (21) du corps creux (20),
**caractérisé en ce que**
v. la configuration du bord en forme de U et de la paroi intérieure empêche, après le remplissage, le produit cosmétique rempli de passer du renfoncement de la cuillère de prélèvement vers l'extérieur ou la zone inférieure de la paroi intérieure pendant le transport et le stockage.

2. Dispositif selon la revendication 1,
dans lequel la paroi intérieure (21) du corps creux (20) et le renfoncement (17) de la zone de tête (11) de la cuillère de prélèvement (10) sont configurés de telle sorte qu'à l'état relié, le côté extérieur de la zone de tête (11) de la cuillère de prélèvement (10) s'applique contre la paroi intérieure (21) du corps creux (20).

3. Dispositif selon l'une quelconque des revendications précédentes,
dans lequel la cuillère de prélèvement (10) comprend une zone de socle (14) disposée entre la zone de tête (11) et le manche (13), laquelle comprend une zone de liaison (15) tournée vers le manche (13) et une zone d'étanchéité (18) tournée vers la zone de tête (11), et le corps creux (20) comprend une autre zone de liaison (24) disposée sur la paroi intérieure (21) dans la zone de l'ouverture (22),
dans lequel les zones de liaison sont configurées de telle sorte que la liaison amovible est réalisée par la liaison de ces zones de liaison entre elles et que la zone d'étanchéité (18) de la cuillère de prélèvement est pressée, à l'état relié, de manière étanche contre la paroi intérieure du corps creux.

4. Dispositif selon la revendication 3,
dans lequel la zone de liaison (15) de la cuillère de prélèvement (10) comprend un filetage extérieur (12) et la zone de liaison (24) du corps creux (20) comprend un filetage intérieur (25).

5. Dispositif selon la revendication 4,
dans lequel le filetage intérieur (25) et le filetage extérieur (12) sont configurés comme des filetages trapézoïdaux (40) avec un angle de flanc d'au moins 28° et d'au plus 32°, en particulier de 30°, et assurent une fermeture étanche à l'état relié.

6. Dispositif selon l'une quelconque des revendications précédentes,
dans lequel la paroi extérieure (23) du corps creux (20) est de forme hyperboloïde, cylindrique et/ou conique.

7. Dispositif selon l'une quelconque des revendications précédentes,
dans lequel le renfoncement (17) de la zone de tête (11) de la cuillère de prélèvement (10) comprend un volume de remplissage de 1 à 4 ml.

8. Dispositif selon l'une quelconque des revendications précédentes,
dans lequel le renfoncement de la cuillère de prélèvement est de forme ergonomique et présente une profondeur de 3 à 10 mm, une largeur de 12 à 17 mm et une longueur de 25 à 40 mm.

9. Dispositif selon la revendication 3, 4 ou 5,
ou selon l'une des revendications 6 à 8, dans la mesure où elle dépend directement ou indirectement de la revendication 3,
dans lequel la zone de socle (14) et le manche (13) forment ensemble une cavité (19) au moins partiellement accessible de l'extérieur.

10. Dispositif selon l'une quelconque des revendications précédentes, dans lequel un couvercle (26) complémentaire du bord en forme de U (16) de la cuillère de prélèvement (10) est prévu dans le corps creux (20) avec une bague ou demi-bague (27) montée rotatif dans une rainure (28) sur la paroi intérieure (21) du corps creux, ledit couvercle peut être appliqué de manière étanche sur le bord en forme de U (16) de la cuillère de prélèvement (10) lorsque le corps creux (20) et la cuillère de prélèvement (10) sont reliés.

11. Dispositif selon l'une quelconque des revendications précédentes,
dans lequel le corps creux (20) comprend un fond (30) disposé en face de l'ouverture (22), l'ouverture (22) et le fond (30) sont circulaires et le diamètre de l'ouverture (22) se situe dans la plage de 90 à 110 % du diamètre du fond (30).

12. Dispositif selon l'une quelconque des revendications précédentes, dans lequel le dispositif comprend un identifiant.

13. Procédé d'identification et de remplissage hygiénique d'un produit cosmétique d'un certain lot pour un utilisateur, comprenant les étapes suivantes :
(1) installation d'un logiciel d'application sur un terminal mobile de l'utilisateur,
(2) ouverture du logiciel d'application,
(3) saisie de l'information de l'identifiant d'un dispositif selon la revendication 12, saisie de certaines informations relatives au produit cosmétique rempli ou à remplir, à savoir au moins la désignation du lot, le nom de la personne responsable, l'adresse de la personne responsable, le nom du produit cosmétique, l'usage prévu et la durée de conservation,
(4) combinaison numérique des informations saisies,
(5) remplissage d'une quantité prédéfinie du produit cosmétique dans le dispositif.

14. Procédé selon la revendication 13,
dans lequel on exécute comme étapes supplémentaires après l'étape (2) la création d'un profil de l'utilisateur et la saisie des informations relatives à ce profil.

15. Procédé selon la revendication 13 ou 14,
dans lequel, en accédant à au moins une des informations saisies, l'utilisateur récupère ou affiche dans le logiciel d'application les informations ainsi combinées numériquement relatives au dispositif et au produit cosmétique qui y est rempli.

16. Procédé selon la revendication 13 ou 14,
dans lequel le logiciel d'application enregistre les informations saisies et la combinaison numérique dans un cloud et, en accédant à au moins une des informations saisies, les informations ainsi combinées numériquement peuvent être récupérées ou affichées à partir du cloud.
